# EUROPÄISCHE PATENTSCHRIFT

(11) **EP 2 139 748 B1**
(45) Veröffentlichungstag und Bekanntmachung des Hinweises auf die Patenterteilung: **15.09.2010**
(21) Anmeldenummer: 08736531.8
(22) Anmeldetag: 24.04.2008
(51) Int. Cl.: B62D 5/12, B62D 5/22

(54) **HILFSKRAFTLENKVORRICHTUNG FÜR EIN FAHRZEUG**
AUXILIARY FORCE STEERING DEVICE FOR A VEHICLE
DISPOSITIF DE DIRECTION ASSISTEE POUR VEHICULE

(30) Priorität: 27.04.2007 DE 102007019906
(43) Veröffentlichungstag der Anmeldung: 06.01.2010
(73) Patentinhaber: ZF Lenksysteme GmbH, 73527 Schwäbisch Gmünd (DE)
(72) Erfinder: HÄGELE, Michael, 73432 Aalen (DE); LINDE, Joachim, 73550 Waldstetten (DE)
(86) Internationale Anmeldenummer: PCT/EP2008/054986
(87) Internationale Veröffentlichungsnummer: WO 2008/132125

(56) Entgegenhaltungen:
- EP-A- 1 052 159
- EP-B- 0 937 206
- JP-A- 8 183 469

## Beschreibung

Die Erfindung bezieht sich auf eine Hilfskraftlenkvorrichtung für ein Fahrzeug nach dem Oberbegriff des Anspruches 1.

Eine derartige Hilfskraftlenkvorrichtung, die als Servo-Lenkunterstützungssystem in Kraftfahrzeugen eingesetzt wird, wird in der EP 0 937 206 B1 beschrieben. Die Hilfskraftlenkvorrichtung umfasst einen Servozylinder mit zwei durch einen Arbeitskolben getrennten Druckräumen, die jeweils über eine Druckversorgungseinrichtung mit Hydrauliköl versorgt werden. Je nach gewünschter Arbeitsbewegung des Kolbens wird entweder der eine oder der andere Druckraum im Servozylinder mit unter Druck stehendem Hydrauliköl beaufschlagt.

Um ein hartes Anlaufen des Arbeitskolbens gegen Endanschläge im Servozylinder im Bereich der maximalen Auslenkung zu verhindern, ist die Hilfskraftlenkvorrichtung mit einer Druckentlastungseinrichtung ausgestattet, die bei Erreichen der axialen Endposition des Arbeitskolbens einen Bypass zwischen den beiden Druckräumen öffnet, woraufhin ein Druckausgleich zwischen den Druckräumen stattfindet, so dass eine weitere Auslenkung des Arbeitskolbens in Richtung Endanschlag unterbunden wird. Zu der Druckentlastungseinrichtung gehört ein am Arbeitskolben beweglich gehaltener Ventilkolben, der im Normalbetrieb den Bypass zwischen den Druckräumen abdichtet. Mit Annäherung an den Endanschlag gelangt der bewegliche Ventilkolben in Anschlag mit einer im Servozylinder fest angeordneten Stellbuchse und wird von dieser aus der Dichtposition in eine Öffnungsposition verstellt, wodurch der Bypass geöffnet und ein Überströmen von Hydrauliköl zwischen den Druckräumen ermöglicht wird. Diese Druckbegrenzung bei Erreichen des Endanschlages bewirkt, dass die Pumpe nicht gegen das Druckbegrenzungsventil und somit gegen den maximalen Betriebsdruck fördern muss, was neben einer Geräuschentwicklung auch eine Belastung der Pumpe durch Überhitzung zur Folge hätte. Außerdem wird der Endanschlag vor einer mechanischen Überlastung bzw. Deformation geschützt. Schließlich wird ein Abfallen der Motordrehzahl der Druckpumpe vermieden.

In der EP 1052159 A2 wird eine mehrfach einstellbare und durch einfaches manuelles Einschlagen der Lenkung selbst einstellende Druckabschaltvorrichtung beschrieben. Dabei werden bei Entlastung der gelenkten Achse die Anschlagbolzen bis zu den Punkten verschoben, an dem die Servounterstützung im Betrieb durch Öffnen von Ventilen tatsächlich wegfallen soll. Diese Punkte sind die im Betrieb wirksamen Endanschläge der Lenkung.

Von diesem Stand der Technik ausgehend liegt der Erfindung die Aufgabe zugrunde, mit einfachen konstruktiven Maßnahmen eine Hilfskraftlenkvorrichtung so auszubilden, dass ein Einsatz in verschiedenen Fahrzeugen ermöglicht wird. Es soll insbesondere mit geringem Aufwand die Position des Abschaltpunktes, an dem ein Druckausgleich zwischen den Druckräumen stattfindet, angepasst werden können.

Diese Aufgabe wird erfindungsgemäß mit den Merkmalen des Anspruches 1 gelöst. Die Unteransprüche geben zweckmäßige Weiterbildungen an.

Die erfindungsgemäße Hilfskraftlenkvorrichtung für ein Fahrzeug, insbesondere für ein Kraftfahrzeug, ist im Übertragungsweg zwischen einer Lenkhandhabe, beispielsweise dem Lenkrad, und mindestens einem lenkbaren Fahrzeugrad angeordnet und umfasst einen Servozylinder mit zwei durch einen Arbeitskolben getrennten Druckräumen, wobei die Bewegung des Arbeitskolbens, verursacht durch unter Druck stehendes Medium in den Druckräumen, zur Unterstützung der Lenkbewegung dient. Die Druckräume im Servozylinder diesseits und jenseits des Arbeitskolbens sind jeweils mit einer Druckversorgungseinrichtung verbunden und werden über diese bedarfsweise mit unter Druck stehendem Medium, insbesondere Hydrauliköl versorgt.

Am Arbeitskolben ist ein Ventilkolben beweglich angeordnet, der gegenüber dem Arbeitskolben eine Relativbewegung ausführen kann. Dieser Ventilkolben steht im Normalbetrieb in einer Dichtstellung, in welcher der Ventilkolben einen Bypass bzw. Umgehungskanal abdichtet, über den ein Kurzschluss zwischen den Druckräumen hergestellt werden kann. Mit Annäherung an die axiale Endposition kann der Ventilkolben aus der Dichtposition in eine Öffnungsposition verstellt werden, in der der Umgehungskanal geöffnet und ein Druckausgleich zwischen den Druckräumen über den Umgehungskanal ermöglicht ist. Die Überführung des Ventilkolbens zwischen der Dichtposition und der Öffnungsposition bei Annäherung an die axiale Endstellung erfolgt mittels einer Stellbuchse im Servozylinder, die einen Verstellabschnitt aufweist, gegen den der Ventilkolben bei Annäherung an die axiale Endposition bewegt wird. Der Verstellabschnitt stößt hierbei gegen den Ventilkolben und verstellt diesen aus der Dichtposition in die Öffnungsposition, woraufhin der Umgehungskanal freigegeben wird.

Des Weiteren ist erfindungsgemäß vorgesehen, dass die Stellbuchse im Servozylinder zwar eingepresst, jedoch verschieblich im Servozylinder gehalten ist. Die Stellbuchse weist einen Dichtabschnitt auf, wobei der Arbeitskolben in eine Dichtstellung mit dem Dichtabschnitt zu verbringen ist und in dieser Dichtstellung die Strömungsverbindung zwischen den Druckräumen unterbrochen ist, unabhängig von der Stellung des Ventilkolbens. Hierdurch wird die Möglichkeit eröffnet, die Stellbuchse je nach Anforderung im Servozylinder axial an die gewünschte Position zu positionieren, wodurch der axiale Endanschlag für den Arbeitskolben festgelegt wird. Auf diese Weise kann die Hilfskraftlenkvorrichtung ohne konstruktive Änderungen bzw. Anpassungen für verschiedene Fahrzeugmodelle eingesetzt werden. Erforderlich ist lediglich eine axiale Verstellung der Stellbuchse.

Die axiale Verstellung der Stellbuchse im Servozylinder erfolgt dadurch, dass der Arbeitskolben in die Dichtstellung mit dem Dichtabschnitt an der Stellbuchse gebracht wird, wodurch ungeachtet der aktuellen Position des Ventilkolbens der Umgehungskanal geschlossen ist. Um nun beispielsweise die Stellbuchse in Richtung eines axial weiter entfernten Achsanschlags zu positionieren, werden zunächst die lenkbaren Räder des Fahrzeuges entlastet, beispielsweise durch Anheben des Fahrzeugs oder durch Anordnen der lenkbaren Räder auf Drehtellern, so dass die Gegenhaltekräfte am Rad praktisch auf Null reduziert werden. Im entlasteten Zustand wird anschließend mittels eines vom Fahrer erzeugten Lenkeinschlags der Arbeitskolben so weit in Richtung des Achsanschlags verstellt, bis der Arbeitskolben in die Dichtstellung mit dem Dichtabschnitt der Stellbuchse gelangt. Mit Erreichen dieser Position wird ein weiteres Überströmen über den Umgehungskanal verhindert, so dass bei einem weiteren manuellen Lenkeinschlag die Stellbuchse, welche lediglich im Servozylinder eingeklemmt, jedoch verschieblich gehalten ist, von dem Arbeitskolben nach außen verschoben wird.

Nach dem Erreichen der gewünschten axialen Endposition der Stellbuchse kann das Fahrzeug wieder abgesetzt bzw. von den Drehtellern entfernt werden, es ist danach ein regulärer Lenkbetrieb möglich, in welchem der Arbeitskolben nicht in die Dichtstellung mit dem Dichtabschnitt an der Stellbuchse gelangen kann, da im regulären Betrieb bereits vor dem Erreichen der Dichtstellung der Verstellabschnitt an der Verstellbuchse den beweglichen Ventilkolben beaufschlagt, wodurch der Umgehungskanal geöffnet wird. Auf diese Weise ist sichergestellt, dass im regulären Betrieb ein Druckabbau in dem mit Druck belasteten Druckraum stattfindet, ohne die Stellbuchse zu verstellen. Selbst wenn im regulären Betrieb der Arbeitskolben weiter in Richtung Stellbuchse verstellt wird und schließlich der Arbeitskolben in die Dichtstellung mit dem Dichtabschnitt an der Stellbuchse gelangt, ist eine axiale Verschiebung der Stellbuchse aufgrund der sehr hohen Gegenhaltekräfte nicht möglich, die aufgrund des Fahrzeuggewichtes und der normalerweise hohen Reibung zwischen Reifen und Fahrbahn wirksam sind.

Um eine Verstellung der Stellbuchse in Gegenrichtung - also in eine in Richtung der Mitte hin verschobene Position - zu bewirken (Rejustiervorgang), werden ebenfalls die lenkbaren Räder zunächst entlastet und der Arbeitskolben in Richtung Achsanschlag verstellt, bis der Arbeitskolben in Dichtstellung mit dem Dichtabschnitt der Stellbuchse gelangt. Danach erfolgt ein Absetzen des Fahrzeuges bzw. ein Entfernen von den Drehtellern. Hieran schließt sich eine Lenkbewegung in Gegenrichtung an, was zur Folge hat, dass der den Arbeitskolben in die gewünschte Richtung verstellende Druckraum mit Druck des Mediums beaufschlagt wird, wobei dieser Druck auch auf die Stellbuchse wirkt. Da sich der Arbeitskolben in Dichtstellung mit der Stellbuchse befindet, beaufschlagt der Druck die Stellbuchse wirksam über eine Teilfläche, wodurch eine resultierende Kraftkomponente in die gewünschte Stellrichtung wirksam wird und die Stellbuchse verschoben wird. Im regulären Betrieb findet dagegen keine Verschiebung der Stellbuchse statt, da im regulären Betrieb der Arbeitskolben sich nicht in Dichtstellung mit der Stellbuchse befindet, was zur Folge hat, dass das unter Druck stehende Medium die Stellbuchse von beiden Seiten beaufschlagt, so dass sich diese im Kräftegleichgewicht befindet.

In bevorzugter Ausführung sind der Verstellabschnitt und der Dichtabschnitt an der Stellbuchse in der Weise ausgebildet, dass bei Annäherung des Arbeitskolbens zunächst der Verstellabschnitt in Kontakt mit dem Ventilkolben und erst anschließend der Dichtabschnitt in die Dichtstellung mit dem Arbeitskolben gelangt. Hierdurch ist sichergestellt, dass im Normalbetrieb der Arbeitskolben gar nicht in die Dichtstellung mit dem Dichtabschnitt der Stellbuchse gelangt, da bereits zuvor mit Annäherung an die Stellbuchse der Verstellabschnitt den Ventilkolben in die Öffnungsposition verstellt, woraufhin der Umgehungskanal geöffnet und ein Druckausgleich zwischen den Druckräumen ermöglicht wird. Da eine weitere Lenkunterstützung wegfällt, wäre eine Verstellung in Richtung axialer Endanschlag nur mit einem erheblichen manuellen Kraftaufwand möglich. Bei entlasteten Rädern dagegen ist ein weiteres Verstellen des Arbeitskolbens bis zum Erreichen der Dichtstellung zwischen Dichtabschnitt an der Stellbuchse und Arbeitskolben ohne Weiteres durchführbar.

Erreicht wird dies vorteilhafterweise dadurch, dass der Dichtabschnitt an der Stellbuchse gegenüber dem Verstellabschnitt axial zurückgesetzt ist. Zugleich kann der Dichtabschnitt auch radial zurückgesetzt sein, also gegenüber der Innenwandung des Servozylinders einen größeren Abstand aufweisen als der Verstellabschnitt. Der axiale Abstand zwischen Verstellabschnitt und Dichtabschnitt stellt sicher, dass bei Annäherung an die Stellbuchse zunächst der Verstellabschnitt in Kontakt mit dem Arbeitskolben gelangt, noch bevor der Dichtabschnitt in Kontakt mit dem Arbeitskolben kommt. Die radiale Zurücksetzung des Dichtabschnitts gegenüber dem Verstellabschnitt stellt andererseits sicher, dass zur Durchführung des Justiervorganges das unter Druck stehende Medium die Stellbuchse nur von einer Seite aus wirksam mit Druck beaufschlagt, woraufhin sich die Stellbuchse axial verstellen kann. Befinden sich dagegen die Stellbuchse und der Arbeitskolben nicht in der Dichtstellung, kann das unter Druck stehende Medium die Stellbuchse von beiden Seiten aus angreifen, so dass sich die Stellbuchse im Kräftegleichgewicht befindet.

Der Dichtabschnitt an der Stellbuchse sowie der korrespondierende Abschnitt am Arbeitskolben sind jeweils zweckmäßigerweise als Ringschulter ausgeführt, die miteinander korrespondieren und in die Dichtstellung zu bringen sind. Im Bereich der in der Dichtstellung unmittelbar aneinanderliegenden Flächen kann ein Dichtring vorgesehen sein, der insbesondere in eine Nut an der Ringschulter des Arbeitskolbens eingesetzt ist.

Damit der Ventilkolben gegenüber dem Arbeitskolben eine Relativbewegung ausführen kann, ist der Ventilkolben vorteilhafterweise in einer Nut im Arbeitkolben axial verschieblich gelagert. Der Ventilkolben befindet sich im Arbeitskolben im Normalbetrieb in einer den Umgehungskanal verschließenden Dichtstellung und wird von dem Verstellabschnitt der Verstellbuchse aus dieser Dichtstellung in eine Öffnungsstellung überführt, so dass der Umgehungskanal geöffnet ist. Hierbei kann es zweckmäßig sein, den Ventilkolben zweiteilig auszuführen, wobei die Ventilkolbenteile in Dichtstellung jeweils an einer Dichtkante anliegen, die den Umgehungskanal begrenzt. Die beiden Ventilkolbenteile sind bevorzugt über ein Federelement axial positioniert, das insbesondere als Druckfeder ausgebildet ist und die beiden Ventilkolbenteile in entgegengesetzte Richtungen an eine jeweilige Dichtkante presst, welche am Arbeitskolben ausgebildet ist. Vorteilhaft begrenzt der Ventilkolben einen Radialspalt, welcher Teil des Umgehungskanals ist, wobei die Breite des Radialspalts von der aktuellen Position des Ventilkolbens bestimmt wird. Je nach Position des Ventilkolbens ist der Radialspalt mehr oder weniger breit, wodurch ein zumindest annähernd viskositätsunabhängiger Druckabbau bzw. Druckausgleich zwischen den Druckräumen realisiert werden kann. Dies erfolgt insbesondere dadurch, dass in eine den Radialspalt begrenzende Wandung eine querschnittsverändernde Stufe eingebracht ist, an der ein Druckabfall des in den Umgehungskanal einströmenden Mediums entsteht. Die Druckdifferenz zwischen dem Druck stromauf und stromab der querschnittsverändernden Stufe wirkt axial auf die Ventilkolbenfläche, welche sich vor der Stufe befindet und beaufschlagt diese mit einer Kraft gegen das Federelement, welches auf die Ventilkolbenteile wirkt. Über eine Einstellung der Stufe einerseits sowie der Fläche am Ventilkolben stromauf der Stufe andererseits kann eine Anpassung an Medien, insbesondere hydraulische Medien mit dem niedrigsten gewünschten Viskositätswert durchgeführt werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, mit einem auf das Lenkgetriebe wirkenden Servomotor und einem dem Lenkgetriebe vorgeschalteten Überlagerungsgetriebe,
- Fig. 2: einen Schnitt durch den Servozylinder einer Hilfskraftlenkvorrichtung,
- Fig. 3: einen vergrößerten Ausschnitt aus dem Bereich des im Servozylinder geführten Arbeitskolbens und Ventilkolbens.

In den Figuren sind gleiche Bauteile mit gleichen Bezugszeichen versehen.

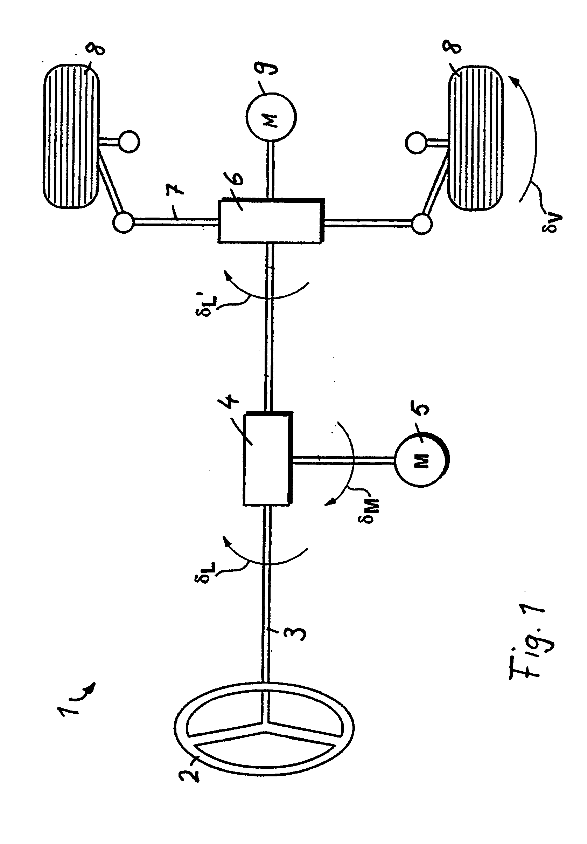

In Fig. 1 ist ein Lenksystem 1 für ein Kraftfahrzeug dargestellt, bei dem vom Fahrer über das Lenkrad 2 ein Lenkwinkel δ_{L} eingestellt wird, der über die Lenkwelle 3 und ein Lenkgetriebe 6 auf das Lenkgestänge 7 übertragen wird, welche die lenkbaren Vorderräder 8 mit dem gewünschten Radlenkwinkel δ_{V} einstellt. Die Lenkwelle 3 ist zweigeteilt, wobei in die Lenkwelle 3 ein Überlagerungsgetriebe 4 zwischengeschaltet ist, mit dessen Hilfe dem vom Fahrer vorgegebenen Lenkwinkel δ_{L} ein Zusatzlenkwinkel δ_{M} zu einem resultierenden Lenkwinkel δ_{L}' überlagert werden kann. Im Überlagerungsgetriebe 4 ist ein Stell- bzw. Servomotor 5 angeordnet, bei dessen Betätigung der gewünschte Zusatzlenkwinkel δ_{M} erzeugt wird. Ohne Betätigung des Stellmotors 5 wird auch kein Zusatzlenkwinkel δ_{M} generiert, so dass der resultierende Lenkwinkel δ_{L}' mit dem vom Fahrer vorgegebenen Lenkwinkel δ_{L} identisch ist.

Gegebenenfalls kann auf das Überlagerungsgetriebe 4 auch verzichtet werden.

Des Weiteren ist im Lenksystem 1 ein Servomotor 9 als Hilfskraftlenkvorrichtung vorgesehen, der zur Unterstützung und Reduzierung des vom Fahrer aufzubringenden Lenkmomentes auf das Lenkgetriebe 6 wirkt, über das die Lenkbewegung des Fahrers auf das Lenkgestänge 7 übertragen wird. Die Hilfskraftlenkvorrichtung wird im Folgenden näher beschrieben.

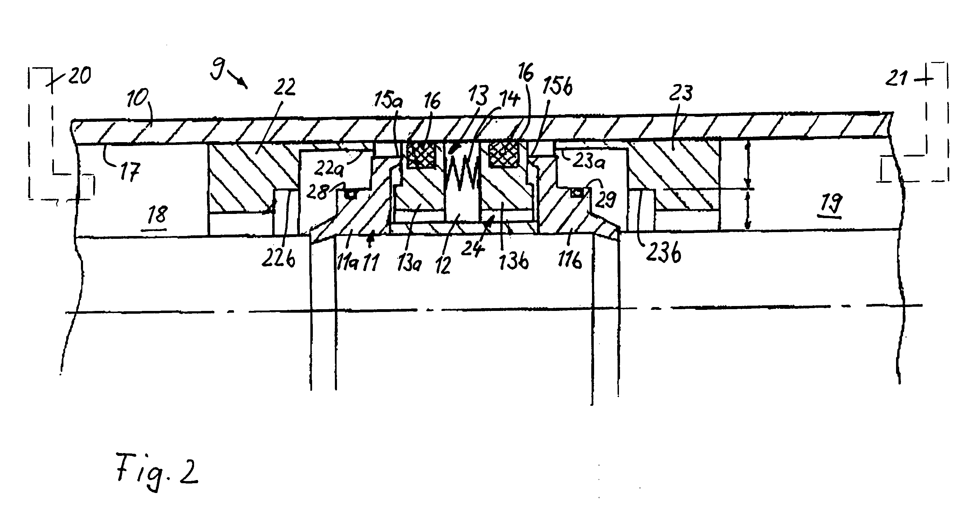

Die Hilfskraftlenkvorrichtung 9 ist pneumatisch oder hydraulisch ausgeführt und umfasst, wie Fig. 2 zu entnehmen, einen Servozylinder 10, in welchem ein Arbeitskolben 11 axial verschieblich geführt ist. Der Arbeitskolben 11 ist Träger eines Ventilkolbens 13, der gegenüber dem Arbeitskolben 11 eine axiale Relativbewegung ausführen kann. Hierfür weist der Arbeitskolben 11 eine von Stirnabschnitten 11a und 11b axial begrenzte Nut 12 auf, in welcher der ringförmige Ventilkolben 13 aufgenommen und in dieser axial verschieblich gelagert ist.

Der Ventilkolben 13 ist zweiteilig ausgebildet und umfasst zwei einzelne, voneinander getrennt ausgebildete Ventilkolbenteile 13a und 13b, die jeweils in der Nut 12 des Arbeitskolbens 11 axial verschieblich geführt sind und über ein als Druckfeder ausgeführtes Federelement 14 aneinander gekoppelt sind. Das Federelement 14 beaufschlagt die beiden Ventilkolbenteile 13a und 13b in entgegengesetzte axiale Richtungen und drückt jedes Ventilkolbenteil 13a, 13b gegen eine Dichtkante 15a, 15b, die jeweils an den Stirnabschnitten 11a, 11b ausgebildet ist. In jedem Ventilkolbenteil 13a, 13b befindet sich zur Abdichtung gegenüber der Innenwand 17 des Servozylinders 10 ein radial außen liegender Dichtring 16.

Der Arbeitskolben 11 mit den Ventilkolben 13 unterteilt den Innenraum im Servozylinder 10 in zwei Druckräume 18 und 19, die im regulären Betrieb strömungsdicht voneinander separiert sind und über Zu- und Abflüsse 20, 21 jeweils mit Druckversorgungseinrichtungen verbunden sind. Über diese Zu-und Abflüsse 20 und 21 kann Medium unter Druck in den jeweils zugeordneten Druckraum 18 bzw. 19 einströmen bzw. es kann Medium aus dem jeweiligen Druckraum über die Zu- und Abflüsse 20, 21 abgeführt werden. In jedem Druckraum ist eine Stellbuchse 22, 23 angeordnet, die den jeweiligen axialen Endanschlag bei der Axialverstellung des Arbeitskolbens 11 darstellt. Durch Einleiten des unter Druck stehenden Mediums über den jeweiligen Zufluss 20, 21 in den zugeordneten Druckraum 18 bzw. 19 kann der Arbeitskolben 11 in Richtung der jeweils gegenüberliegenden Stellbuchse 23, 22 verstellt werden.

Die Stellbuchsen 22 und 23 sind zueinander identisch aufgebaut, jedoch spiegelverkehrt angeordnet und weisen jeweils einen axial überstehenden Verstellabschnitt 22a auf, der sich in Richtung des Arbeitskolbens 11 erstreckt. Der Verstellabschnitt 22a, 23a befindet sich auf der radialen Außenseite jeder Stellbuchse 22, 23 und liegt unmittelbar an der Innenwand 17 des Servozylinders 10 an. Die Verstellabschnitte 22a, 23a haben die Aufgabe, bei Annäherung des Arbeitskolbens 11 an den jeweiligen axialen Endanschlag das zugeordnete Ventilkolbenteil 13a bzw. 13b zu beaufschlagen und gegen die Kraft der Druckfeder 14 axial zurückzuschieben. Um eine Kollision mit dem Arbeitskolben 11 zu verhindern, ist der jeweilige Stirnabschnitt 11a, 11b des Arbeitskolbens radial verjüngt ausgeführt und erstreckt sich nicht bis zur Innenseite 17 des Servozylinders 10, so dass ein Durchtritt für den Verstellabschnitt 22a bzw. 23a freigegeben ist. Bei axialer Annäherung des Arbeitskolbens 11 an die jeweilige Stellbuchse 22, 23 verschiebt der jeweilige Verstellabschnitt 22a bzw. 23a das zugeordnete Ventilkolbenteil 13a bzw. 13b gegen die Kraft des Federelementes 13 zurück, so dass die Dichtkante 15a bzw. 15b von dem jeweiligen Ventilkolbenteil freigegeben wird.

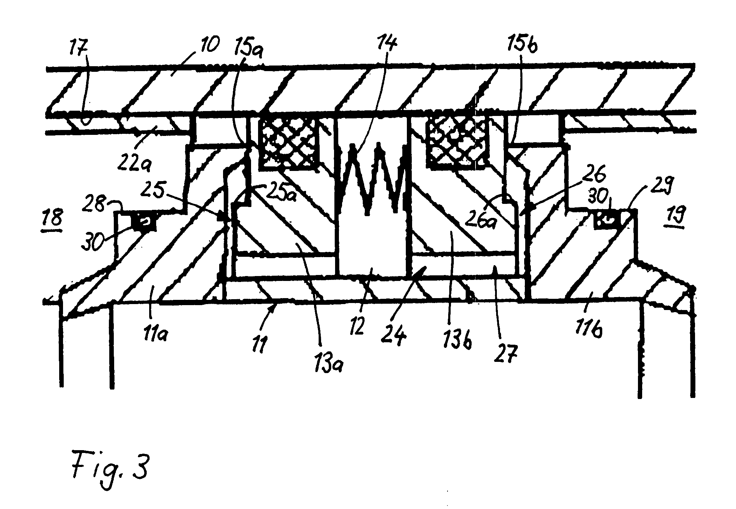

Wie Fig. 2 und Fig. 3 zu entnehmen, ist zwischen dem Arbeitskolben 11 und dem Ventilkolben 13 ein Umgehungskanal 24 gebildet, der einen unmittelbaren Strömungsübertritt zwischen den Druckräumen 18 und 19 ermöglicht, so dass bei geöffnetem Umgehungskanal 24 ein Druckausgleich zwischen den Druckräumen stattfinden kann. Der Umgehungskanal setzt sich aus zwei Radialspalten 25 und 26 und einem die beiden Radialspalte verbindenden Axialspalt 27 zusammen, wobei die Radialspalte 25 und 26 jeweils in Radialrichtung verlaufen und von einander zugewandten Seiten des Stirnabschnittes 11a bzw. 11b und des Ventilkolbenteils 13a bzw. 13b begrenzt sind. Der sich in Achsrichtung erstreckende Axialspalt 27 zwischen den beiden Radialspalten 25 und 26 ist auf der radialen Innenseite von dem Nutgrund der Nut 12 begrenzt und auf der radialen Außenseite von den radialen Innenseiten der Ventilkolbenteile 13a und 13b.

Wird der Arbeitskolben 11, bezogen auf die Schnittdarstellung der Figuren 2 und 3, durch Druckbeaufschlagung des rechts liegenden Druckraumes 19 nach links verschoben, so läuft das Ventilkolbenteil 13a gegen den Verstellabschnitt 22a der Stellbuchse 22 an und wird dadurch aus der eingezeichneten Dichtstellung gegen die Kraft des Federelementes 14 von der Dichtkante 15a axial abgehoben. Dadurch ist der Umgehungskanal in diesem Bereich freigegeben. Zugleich drückt das Medium auf der Seite des Druckraumes 19 das zweite Ventilkolbenteil 13b ebenfalls gegen die Kraft des Federelementes 14 von der Dichtkante 15b weg, so dass auch auf dieser Seite der Umgehungskanal freigegeben und ein einen Kurzschluss bildender, unmittelbarer Strömungsübertritt zwischen den beiden Druckräumen 18 und 19 gegeben ist. Daraufhin kann aufgrund des Druckunterschiedes Medium aus dem Druckraum 19 über den Umgehungskanal 24 in den Druckraum 18 überströmen. Der Druckausgleich funktioniert in analoger Weise, wenn der Arbeitskolben 11 durch eine Druckbeaufschlagung im Druckraum 18 nach rechts bewegt wird.

In jedem Radialspalt 25, 26 ist eine querschnittsreduzierende Stufe 25a bzw. 26a vorhanden, die an der begrenzenden Wandseite der Ventilkolbenteile 13a bzw. 13b gebildet ist. Dadurch weist der Radialspalt 25 bzw. 26 im radial außen liegenden, der Dichtkante 15a bzw. 15b benachbarten Seite einen größeren Querschnitt auf als auf der radial innen liegenden, dem Axialspalt 24 zugewandten Seite. Durch diese Querschnittsänderung entsteht bei geöffnetem Umgehungskanal ein Druckabfall im jeweiligen Radialspalt über die Stufe 25a bzw. 26a hinweg, der das Ventilkolbenteil 13a bzw. 13b entsprechend der Fläche der axialen Stirnseite des Ventilkolbenteils radial oberhalb der Stufe beaufschlagt, wodurch eine das betreffende Ventilkolbenteil gegen die Kraft des Federelementes 14 verstellende Druckkraft erzeugt wird. Diese Druckkraft wird auf derjenigen Seite des Ventilkolbens wirksam, die der jeweiligen Bewegungsrichtung des Arbeitskolbens abgewandt ist.

Jede Stellbuchse 22, 23 weist zusätzlich zum Verstellabschnitt 22a bzw. 23a einen Dichtabschnitt 22b bzw. 23b auf, der als gegenüber dem Verstellabschnitt radial und axial zurückgesetzte Ringschulter ausgebildet ist und mit einer korrespondierenden Ringschulter 28 bzw. 29 am zugewandten Stirnabschnitt 11a bzw. 11b des Arbeitskolbens 11 zusammenwirkt. Der Dichtabschnitt 22b bzw. 23b ist gegenüber dem Verstellabschnitt 22a bzw. 23a radial nach innen versetzt sowie axial - bezogen auf den jeweils zugeordneten Stirnabschnitt 11a bzw. 11b des Arbeitskolbens - axial zurückgesetzt. Der Dichtabschnitt 22b bzw. 23b kann mit der zugeordneten Ringschulter 28 bzw. 29 am Arbeitskolben 11 in eine Dichtstellung gebracht werden, in der die einander zugewandten Flächen von Dichtabschnitt und Ringschulter dichtend aneinanderliegen. Zur Verbesserung der Dichtwirkung ist in die Ringschulter 28 bzw. 29 ein Dichtring 30 (Fig. 3) eingesetzt. Diese Dichtstelle dient dazu, auch bei geöffnetem Umgehungskanal 24 den direkten Strömungsweg zwischen den Druckräumen 18 und 19 zu unterbinden. Hierdurch ist es möglich, die Stellbuchse 22 bzw. 23, die im Servozylinder 10 mit einer Klemmkraft gehalten, jedoch axial verschieblich ist, an eine gewünschte axiale Position innerhalb des Servozylinders zu bringen, ohne Werkzeug oder sonstige aufwändige Maßnahmen einsetzen zu müssen.

Erreicht wird dies dadurch, dass das Fahrzeug mit den lenkbaren Rädern entweder angehoben oder die lenkbaren Räder auf einen Drehteller gestellt werden, woraufhin der Arbeitskolben durch Betätigung des Lenkrades bis zum axialen Endanschlag derjenigen Stellbuchse gebracht wird, deren axiale Position neu eingestellt werden soll. Mit Annäherung an die betreffende Stellbuchse gelangt zunächst der Verstellabschnitt in Kontakt mit dem zugeordneten Ventilkolbenteil und drückt dieses aus der Dichtstellung an der jeweils zugeordneten Dichtkante ab, so dass der Umgehungskanal 24 freigegeben ist und zunächst ein Druckausgleich zwischen den Druckräumen 18 und 19 stattfinden kann. Da die lenkbaren Räder jedoch entlastet sind, kann mit verhältnismäßig geringem manuellem Aufwand der Arbeitskolben weiter in Richtung Stellbuchse verstellt werden, bis der Dichtabschnitt 22b bzw. 23b in eine Dichtstellung mit der zugeordneten Ringschulter 28 bzw. 29 gelangt. Daraufhin ist die Strömungsverbindung zwischen den Drückräumen 18 und 19 wieder unterbrochen.

Um nun die jeweilige Stellbuchse 22 bzw. 23 in Richtung eines größeren axialen Endanschlages nach außen zu verstellen, muss lediglich das Lenkrad bei weiterhin entlasteten Rädern gegen den axialen Endanschlag verstellt werden, woraufhin der Arbeitskolben 11 die jeweilige Stellbuchse 22 bzw. 23 gegen deren Klemmkraft axial im Servozylinder 10 nach außen verschiebt.

Um eine Verschiebung in Gegenrichtung zu erreichen, werden die lenkbaren Räder, nachdem der Dichtkontakt zwischen dem Dichtabschnitt 22b bzw. 23b und der jeweiligen Ringschulter 28, 29 hergestellt worden ist, abgesetzt bzw. von dem Drehteller entfernt, so dass die übliche Gegenhaltekraft wirksam wird. Sobald nun in Gegenrichtung gelenkt wird, wird ein entsprechend erhöhter Druck in dem jeweiligen Druckraum 18 bzw. 19 aufgebaut, der sowohl auf die Stellbuchse 22 bzw. 23 als auch auf den Arbeitskolben 11 wirkt. Da jedoch die jeweilige Stellbuchse 22, 23 in Dichtkontakt mit dem zugewandten Stirnabschnitt 11a bzw. 11b des Arbeitkolbens liegt, kann sich das Medium im jeweiligen Druckraum nicht auf alle Seiten der Stellbuchse ausbreiten, sondern greift an der dem Arbeitskolben abgewandten Seite an der Stellbuchse an und beaufschlagt diese Seite mit dem hohen Druck des eingeleiteten Mediums. Daraufhin wird die betreffende Stellbuchse 22 bzw. 23 einschließlich des Arbeitskolbens 11 aus der entfernten axialen Endlage zurück verstellt.

Um den Rückstellvorgang zu begrenzen, kann es zweckmäßig sein, einen Begrenzungsanschlag vorzusehen, gegen den die Stellbuchse läuft. Dieser Begrenzungsanschlag ist beispielsweise als radial einragender Fortsatz an der Innenseite 17 des Servozylinders 10 ausgebildet.

## Patentansprüche

1. Hilfskraftlenkvorrichtung für ein Fahrzeug, die im Übertragungsweg zwischen einer Lenkhandhabe (2) und einem lenkbaren Fahrzeugrad (8) angeordnet ist, mit einem Servozylinder (10) mit zwei durch einen Arbeitskolben (11) getrennten Druckräumen (18, 19), die jeweils mit einer Druckversorgungseinrichtung verbunden sind, mit einem am Arbeitskolben (11) beweglich angeordneten Ventilkolben (13), der einen Umgehungskanal (24) zwischen den Druckräumen (18, 19) abdichtet, wobei im Servozylinder (10) mindestens eine Stellbuchse (22, 23) mit einem Verstellabschnitt (22a, 23a) angeordnet ist, gegen den der Ventilkolben (13) bei Annäherung an ein axiale Endposition bewegt wird, wodurch der Ventilkolben (13) in eine den Umgehungskanal (24) öffnende Stellung beaufschlagt wird,
**dadurch gekennzeichnet,**
**dass** die Stellbuchse (22, 23) im Servozylinder (10) eingeklemmt, jedoch verschieblich gehalten ist und dass die Stellbuchse (22, 23) einen Dichtabschnitt (22b, 23b) aufweist, wobei der Arbeitskolben (11) in eine Dichtstellung mit dem Dichtabschnitt (22b, 23b) zu verbringen ist und in der Dichtstellung die Strömungsverbindung zwischen den Druckräumen (18, 19) unterbrochen ist.

2. Hilfskraftlenkvorrichtung nach Anspruch 1,
**dadurch gekennzeichnet,**
**dass** der Verstellabschnitt (22a, 23a) und der Dichtabschnitt (22b, 23b) an der Stellbuchse (22, 23) in der Weise ausgebildet sind, dass bei Annäherung des Arbeitskolbens (11) zunächst der Verstellabschnitt (22a, 23a) in Kontakt mit dem Ventilkolben (13) und anschließend der Dichtabschnitt (22b, 23b) in die Dichtstellung mit dem Arbeitskolben (11) gelangt.

3. Hilfskraftlenkvorrichtung nach Anspruch 1 oder 2,
**dadurch gekennzeichnet,**
**dass** der Dichtabschnitt (22b, 23b) an der Stellbuchse (22, 23) gegenüber dem Verstellabschnitt (22a, 23a) axial zurückgesetzt ist.

4. Hilfskraftlenkvorrichtung nach einem der Ansprüche 1 bis 3,
**dadurch gekennzeichnet,**
**dass** der Dichtabschnitt (22b, 23b) an der Stellbuchse (22, 23) radial mit Abstand zur Innenwandung (17) des Servozylinders (10) positioniert ist.

5. Hilfskraftlenkvorrichtung nach einem der Ansprüche 1 bis 4,
**dadurch gekennzeichnet,**
**dass** der Dichtabschnitt (22b, 23b) an einer Ringschulter der Stellbuchse (22, 23) ausgebildet ist.

6. Hilfskraftlenkvorrichtung nach einem der Ansprüche 1 bis 5,
**dadurch gekennzeichnet,**
**dass** am Arbeitskolben (11) eine Ringschulter (28, 29) gebildet ist, die mit dem Dichtabschnitt (22b, 23b) an der Stellbuchse (22, 23) korrespondiert und in die Dichtstellung zu bringen ist.

7. Hilfskraftlenkvorrichtung nach einem der Ansprüche 1 bis 6,
**dadurch gekennzeichnet,**
**dass** der Ventilkolben (13) in einer Nut (12) im Arbeitskolben (11) axial verschieblich gelagert ist.

8. Hilfskraftlenkvorrichtung nach einem der Ansprüche 1 bis 7,
**dadurch gekennzeichnet,**
**dass** der Ventilkolben (13) zweigeteilt ist, wobei die Ventilkolbenteile (13a, 13b) in Dichtstellung jeweils an einer den Umgehungskanal (24) begrenzenden Dichtkante (15a, 15b) anliegt.

9. Hilfskraftlenkvorrichtung nach Anspruch 8,
**dadurch gekennzeichnet,**
**dass** die beiden Ventilkolbenteile (13a, 13b) über ein Federelement (14) positioniert gehalten sind.

10. Hilfskraftlenkvorrichtung nach einem der Ansprüche 1 bis 9,
**dadurch gekennzeichnet,**
**dass** der Ventilkolben (13) einen Radialspalt (25, 26) des Umgehungskanals (24) begrenzt, wobei die Breite des Radialspalts (25, 26) von der aktuellen Position des Ventilkolbens (13) bestimmt ist.

11. Hilfskraftlenkvorrichtung nach Anspruch 10,
**dadurch gekennzeichnet,**
**dass** der Umgehungskanal (24) einen mit dem Radialspalt (25, 26) verbundenen Axialspalt (27) mit konstantem Querschnitt aufweist.

12. Hilfskraftlenkvorrichtung nach Anspruch 10 oder 11,
**dadurch gekennzeichnet,**
**dass** in eine den Radialspalt (25, 26) begrenzende Wandung eine querschnittsverändernde Stufe (25a, 26a) eingebracht ist.

13. Hilfskraftlenkvorrichtung nach Anspruch 12,
**dadurch gekennzeichnet,**
**dass** die Stufe (25a, 26a) in die den Radialspalt (25, 26) begrenzende Wandung des Ventilkolbens (13) eingebracht ist.

14. Hilfskraftlenkvorrichtung nach Anspruch 12 oder 13,
**dadurch gekennzeichnet,**
**dass** die Stufe (25a, 26a) im Radialspalt (25, 26) auf ein Arbeitsmedium im Servozylinder (10) geringster Viskosität angepasst ist, derart, dass an der Stufe (25a, 26a) ein Druckabfall entsteht, der den Ventilkolben (13) axial gegen die Kraft des auf ihn wirkenden Federelements (14) verschiebt.

15. Verfahren zur axialen Verstellung der Stellbuchse (22, 23) in einer Hilfskraftlenkvorrichtung (9) nach einem der Ansprüche 1 bis 14, bei dem die lenkbaren Räder (8) entlastet werden und im entlasteten Zustand mittels Lenkeinschlags der Arbeitskolben (11) soweit in Richtung Achsanschlag verstellt wird, bis der Arbeitskolben (11) in Dichtstellung mit dem Dichtabschnitt (22b, 23b) der Stellbuchse (22, 23) liegt.

16. Verfahren nach Anspruch 15,
**dadurch gekennzeichnet,**
**dass** die Verschiebung der Stellbuchse (22, 23) in Richtung eines axial entfernteren Achsanschlags bei entlasteten lenkbaren Rädern (8) erfolgt.

17. Verfahren nach Anspruch 15 oder 16,
**dadurch gekennzeichnet,**
**dass** die Verschiebung der Stellbuchse (22, 23) in Gegenrichtung unter Last erfolgt.

## Claims

1. Power steering apparatus for a vehicle, which power steering apparatus is arranged in the transmission path between a steering handle (2) and a steerable vehicle wheel (8), having a servocylinder (10) with two pressure chambers (18, 19) which are separated by a working piston (11) and are connected in each case to a pressure supply device, having a valve piston (13) which is arranged movably on the working piston (11) and seals a bypass channel (24) between the pressure chambers (18, 19), at least one adjusting bush (22, 23) with an adjusting section (22a, 23a) being arranged in the servocylinder (10), against which adjusting section (22a, 23a) the valve piston (13) is moved when approaching an axial end position, as a result of which the valve piston (13) is loaded into a position which opens the bypass channel (24), **characterized in that** the adjusting bush (22, 23) is held clamped in the servocylinder (10) but such that it can be displaced, and **in that** the adjusting bush (22, 23) has a sealing section (22b, 23b); the working piston (11) is to be moved into a sealing position with the sealing section (22b, 23b) and the flow connection between the pressure chambers (18, 19) is interrupted in the sealing position.

2. Power steering apparatus according to Claim 1, **characterized in that** the adjusting section (22a, 23a) and the sealing section (22b, 23b) are formed on the adjusting bush (22, 23) in such a way that, when approaching the working piston (11), first of all the adjusting section (22a, 23a) comes into contact with the valve piston (13) and subsequently the sealing section (22b, 23b) passes into the sealing position with the working piston (11).

3. Power steering apparatus according to Claim 1 or 2, **characterized in that** the sealing section (22b, 23b) is set back axially on the adjusting bush (22, 23) with respect to the adjusting section (22a, 23a).

4. Power steering apparatus according to one of Claims 1 to 3, **characterized in that** the sealing section (22b, 23b) is positioned on the adjusting bush (22, 23) radially at a spacing from the inner wall (17) of the servocylinder (10).

5. Power steering apparatus according to one of Claims 1 to 4, **characterized in that** the sealing section (22b, 23b) is formed on an annular shoulder of the adjusting bush (22, 23).

6. Power steering apparatus according to one of Claims 1 to 5, **characterized in that** an annular shoulder (28, 29) is formed on the working piston (11), which annular shoulder (28, 29) corresponds with the sealing section (22b, 23b) on the adjusting bush (22, 23) and can be moved into the sealing position.

7. Power steering apparatus according to one of Claims 1 to 6, **characterized in that** the valve piston (13) is mounted axially displaceably in a groove (12) in the working piston (11).

8. Power steering apparatus according to one of Claims 1 to 7, **characterized in that** the valve piston (13) is divided in two, the valve-piston parts (13a, 13b) bearing in the sealing position in each case against a sealing edge (15a, 15b) which delimits the bypass channel (24).

9. Power steering apparatus according to Claim 8, **characterized in that** the two valve-piston parts (13a, 13b) are held positioned via a spring element (14).

10. Power steering apparatus according to one of Claims 1 to 9, **characterized in that** the valve piston (13) delimits a radial gap (25, 26) of the bypass channel (24), the width of the radial gap (25, 26) being defined by the current position of the valve piston (13).

11. Power steering apparatus according to Claim 10, **characterized in that** the bypass channel (24) has an axial gap (27) which is connected to the radial gap (25, 26) and has a constant cross section.

12. Power steering apparatus according to Claim 10 or 11, **characterized in that** a step (25a, 26a) which changes the cross section is made in a wall which delimits the radial gap (25, 26).

13. Power steering apparatus according to Claim 12, **characterized in that** the step (25a, 26a) is made **in that** wall of the valve piston (13) which delimits the radial gap (25, 26).

14. Power steering apparatus according to Claim 12 or 13, **characterized in that** the step (25a, 26a) in the radial gap (25, 26) is adapted to a working medium in the servocylinder (10) of a very low viscosity, in such a way that a pressure drop is produced at the step (25a, 26a), which pressure drop displaces the valve piston (13) axially against the force of the spring element (14) which acts on it.

15. Method for axially adjusting the adjusting bush (22, 23) in a power steering apparatus (9) according to one of Claims 1 to 14, in which method the steerable wheels (8) are relieved and, in the relieved state, the working piston (11) is adjusted by means of steering lock in the direction of axle stop, until the working piston (11) lies in the sealing position with the sealing section (22b, 23b) of the adjusting bush (22, 23).

16. Method according to Claim 15, **characterized in that** the displacement of the adjusting bush (22, 23) in the direction of an axially more remote axle stop takes place when the steerable wheels (8) are relieved.

17. Method according to Claim 15 or 16, **characterized in that** the displacement of the adjusting bush (22, 23) in the opposite direction takes place under load.

## Revendications

1. Dispositif de direction assistée pour un véhicule, qui est disposé dans la voie de transmission entre un volant de direction (2) et une roue du véhicule dirigeable (8), comprenant un servo-cylindre (10) avec deux espaces de pression (18, 19) séparés par un piston de travail (11), qui sont connectés à chaque fois à un dispositif d'alimentation en pression, un piston de soupape (13) disposé de manière mobile sur le piston de travail (11), qui étanchéifie un canal de contournement (24) entre les espaces de pression (18, 19), au moins un manchon de commande (22, 23) étant disposé dans le servo-cylindre (10) avec une portion de réglage (22a, 23a), contre laquelle le piston de soupape (13) est déplacé lorsqu'il se rapproche d'une position de fin de course axiale, de sorte que le piston de soupape (13) soit sollicité dans une position ouvrant dans le canal de contournement (24),
**caractérisé en ce que**
le manchon de commande (22, 23) est fixé par serrage dans le servo-cylindre (10) mais est maintenu de manière coulissante et **en ce que** le manchon de commande (22, 23) présente une portion d'étanchéité (22b, 23b), le piston de travail (11) devant être amené dans une position d'étanchéité avec la portion d'étanchéité (22b, 23b) et la connexion d'écoulement entre les espaces de pression (18, 19) étant interrompue dans la position d'étanchéité.

2. Dispositif de direction assistée selon la revendication 1,
**caractérisé en ce que**
la portion de réglage (22a, 23a) et la portion d'étanchéité (22b, 23b) sont réalisées sur le manchon de commande (22, 23) de telle sorte que lors d'un rapprochement du piston de travail (11) la portion de réglage (22a, 23a) parvienne d'abord en contact avec le piston de soupape (13), puis que la portion d'étanchéité (22b, 23b) parvienne en contact avec le piston de travail (11) dans la position d'étanchéité.

3. Dispositif de direction assistée selon la revendication 1 ou 2,
**caractérisé en ce que**
la portion d'étanchéité (22b, 23b) est en retrait axial sur le manchon de commande (22, 23) par rapport à la portion de réglage (22a, 23a).

4. Dispositif de direction assistée selon l'une quelconque des revendications 1 à 3,
**caractérisé en ce que**
la portion d'étanchéité (22b, 23b) est positionnée sur le manchon de commande (22, 23) radialement à distance de la paroi interne (17) du servo-cylindre (10).

5. Dispositif de direction assistée selon l'une quelconque des revendications 1 à 4,
**caractérisé en ce que**
la portion d'étanchéité (22b, 23b) est réalisée sur un épaulement annulaire du manchon de commande (22, 23).

6. Dispositif de direction assistée selon l'une quelconque des revendications 1 à 5,
**caractérisé en ce**
**qu'**un épaulement annulaire (28, 29) est formé sur le piston de travail (11), lequel correspond à la portion d'étanchéité (22b, 23b) sur le manchon de commande (22, 23) et peut être amené dans la position d'étanchéité.

7. Dispositif de direction assistée selon l'une quelconque des revendications 1 à 6,
**caractérisé en ce que**
le piston de soupape (13) est monté de manière déplaçable axialement dans une rainure (12) dans le piston de travail (11).

8. Dispositif de direction assistée selon l'une quelconque des revendications 1 à 7,
**caractérisé en ce que**
le piston de soupape (13) est en deux parties, les parties du piston de soupape (13a, 13b) s'appliquant à chaque fois dans la position d'étanchéité contre une arête d'étanchéité (15a, 15b) limitant le canal de contournement (24).

9. Dispositif de direction assistée selon la revendication 8,
**caractérisé en ce que**
les deux parties de piston de soupape (13a, 13b) sont maintenues en position par le biais d'un élément de ressort (14).

10. Dispositif de direction assistée selon l'une quelconque des revendications 1 à 9,
**caractérisé en ce que**
le piston de soupape (13) limite une fente radiale (25, 26) du canal de contournement (24), la largeur de la fente radiale (25, 26) étant déterminée par la position actuelle du piston de soupape (13).

11. Dispositif de direction assistée selon la revendication 10,
**caractérisé en ce que**
le canal de contournement (24) présente une fente axiale (27) de section transversale constante connectée à la fente radiale (25, 26).

12. Dispositif de direction assistée selon la revendication 10 ou 11,
**caractérisé en ce que**
dans une paroi limitant la fente radiale (25, 26) est réalisé un gradin (25a, 26a) modifiant la section transversale.

13. Dispositif de direction assistée selon la revendication 12,
**caractérisé en ce que**
le gradin (25a, 26a) est réalisé dans la paroi du piston de soupape (13) limitant la fente radiale (25, 26).

14. Dispositif de direction assistée selon la revendication 12 ou 13,
**caractérisé en ce que**
le gradin (25a, 26a) dans la fente radiale (25, 26) est adapté à un fluide de travail dans le servo-cylindre (10) de très faible viscosité, de telle sorte qu'il se produise au niveau du gradin (25a, 26a) une chute de pression qui déplace le piston de soupape (13) axialement à l'encontre de la force de l'élément de ressort (14) qui agit sur lui.

15. Procédé pour le réglage axial du manchon de commande (22, 23) dans un dispositif de direction assistée (9) selon l'une quelconque des revendications 1 à 14, dans lequel les roues dirigeables (8) sont déchargées et dans l'état déchargé, au moyen d'un braquage de la direction, le piston de travail (11) est déplacé dans la direction de la butée d'axe jusqu'à ce que le piston de travail (11) se trouve dans la position d'étanchéité avec la portion d'étanchéité (22b, 23b) du manchon de commande (22, 23).

16. Procédé selon la revendication 15,
**caractérisé en ce que**
le déplacement du manchon de commande (22, 23) a lieu dans la direction d'une butée d'axe plus éloignée axialement lorsque les roues dirigeables (8) sont déchargées.

17. Procédé selon la revendication 15 ou 16,
**caractérisé en ce que**
le déplacement du manchon de commande (22, 23) dans le sens inverse a lieu en charge.
